# FASCICULE DE BREVET EUROPEEN

(11) **EP 2 710 698 B1**
(45) Date de publication et mention de la délivrance du brevet: **30.09.2015**
(21) Numéro de dépôt: 12725073.6
(22) Date de dépôt: 30.04.2012
(51) Int. Cl.: H02G 3/14, F16B 21/07

(54) **ASSEMBLAGE MECANIQUE DU TYPE A BOUTON-PRESSION, ET APPLICATION A UN APPAREILLAGE ELECTRIQUE**
MECHANISCHE ANORDNUNG VOM DRUCKKNOPFTYP UND ANWENDUNG BEI EINER ELEKTRISCHEN VORRICHTUNG
MECHANICAL ASSEMBLY OF THE PRESS-BUTTON TYPE, AND APPLICATION TO AN ELECTRICAL APPARATUS

(30) Priorité: 18.05.2011 FR 1154320
(43) Date de publication de la demande: 26.03.2014
(73) Titulaire: Legrand France, 87000 Limoges (FR); Legrand SNC, 87000 Limoges (FR)
(72) Inventeur: LOCHET, Anthony, F-72170 Beaumont sur Sarthe (FR); CHAUMENY, Jean-Luc, F-87110 Solignac (FR)
(74) Mandataire: Novagraaf Technologies
(86) Numéro de dépôt international: PCT/FR2012/050956
(87) Numéro de publication internationale: WO 2012/156612

(56) Documents cités:
- WO-A1-2009/132749
- DE-U1- 8 503 906
- NL-A- 6 817 070
- US-A1- 2010 155 099

## Description

L'invention concerne, de façon générale, les techniques permettant de lier deux pièces l'une à l'autre de façon éventuellement réversible.

Plus précisément, l'invention concerne, selon un premier de ses aspects, un assemblage mécanique, comprenant une première pièce, une deuxième pièce, et une liaison à bouton-pression, la liaison comprenant un téton lié à la première pièce et des moyens de retenue liés à la deuxième pièce, le téton présentant, dans le sens de sa longueur, un fût faisant saillie de la première pièce, s'étendant suivant une direction axiale, et se terminant par un renflement radial, et les moyens de retenue comprenant un logement dimensionné pour recevoir le téton qui y est sélectivement introduit suivant la direction axiale et au moins un verrou élastique, disposé dans le logement, mobile transversalement à la direction axiale, et rappelé élastiquement vers une position de repos dans laquelle ce verrou élastique laisse dans le logement un passage plus étroit que l'encombrement du renflement radial, la deuxième pièce s'étendant en épaisseur suivant la direction axiale, cette deuxième pièce étant réalisée dans un matériau autoportant élastiquement flexible, le logement étant formé par un perçage de la deuxième pièce suivant son épaisseur, et chaque verrou élastique étant essentiellement formé par une patte élastiquement flexible formée dans l'épaisseur de la deuxième pièce, délimitée en périphérie du logement par un premier bord, et présentant une liberté de débattement radial d'amplitude non nulle.

Les assemblages de ce type sont bien connus depuis longtemps pour lier l'une à l'autre deux pièces de tissu de façon réversible. Un tel assemblage est décrit dans WO 2009/132749 selon le préambule de la revendication 1.

En revanche, lorsque les pièces à assembler sont rigides, l'assemblage est traditionnellement réalisé en exploitant la flexibilité transversale d'un organe d'assemblage s'étendant suivant la direction de rapprochement des deux pièces à assembler, comme le montre par exemple la figure 8 de la demande de brevet US 2010/0155099.

Néanmoins, ce principe de liaison conduit toujours à un encombrement important, au point qu'il est parfois nécessaire de renoncer à assembler les deux pièces de façon éventuellement réversible et, finalement, de les coller ou les souder l'une sur l'autre.

Dans ce contexte, la présente invention a pour but de proposer un assemblage mécanique permettant de lier l'une à l'autre deux pièces relativement rigides dans un encombrement inférieur à celui auquel conduisent les solutions d'assemblage connues, cet assemblage pouvant de préférence supporter des démontages réalisés avec précaution.

A cette fin, l'assemblage de l'invention, par ailleurs conforme à la définition générique qu'en donne le préambule ci-dessus, est essentiellement caractérisé en ce que le premier bord de chaque patte présente un lamage.

Le terme "perçage" sera ici compris comme le résultat de l'action consistant à traverser une pièce de part en part, quel que soit le procédé mis en oeuvre pour obtenir ce résultat.

Le terme "formée" tel qu'appliqué à la patte élastiquement flexible sera ici compris comme n'impliquant aucune restriction a priori quant au procédé mis en oeuvre pour réaliser cette patte.

Le terme "autoportant" sera ici compris comme applicable à tout matériau capable de supporter son propre poids sans subir de déformation notable, contrairement à ce qui est notamment le cas pour un tissu.

Un matériau "autoportant élastiquement flexible" au sens de la présente description est donc constitué par tout matériau dont la rigidité et l'élasticité sont suffisantes pour lui permettre de reprendre spontanément et au moins approximativement sa forme initiale après avoir subi une contrainte d'amplitude tolérée pour l'usage auquel est destinée la pièce réalisée dans ce matériau.

Par ailleurs, le terme "radial" sera ici compris comme applicable à tout élément ou mouvement ayant au moins une dimension ou une composante perpendiculaire à la direction axiale.

Ainsi, au lieu d'exploiter la flexibilité transversale d'un organe d'assemblage s'étendant suivant la direction de rapprochement des deux pièces à assembler, l'assemblage de l'invention exploite la flexibilité d'une patte formée dans l'épaisseur de la deuxième pièce, et ne conduisant donc à aucun encombrement supplémentaire suivant la direction axiale de rapprochement des deux pièces.

De préférence, la deuxième pièce présente, pour chaque patte, une lumière correspondante de dégagement radial pratiquée dans l'épaisseur de cette deuxième pièce, chaque patte présentant un deuxième bord qui la délimite de la lumière correspondante, cette patte s'étendant donc entre ses premier et deuxième bords.

Chaque patte peut avantageusement présenter une extrémité libre pour disposer d'une flexibilité maximale.

Le premier bord de chaque patte présente un lamage, auquel cas il est possible de prévoir que le téton d'une part et le lamage du premier bord de chaque patte d'autre part présentent, dans un plan passant par la direction axiale, des profils respectifs au moins partiellement complémentaires, la complémentarité de ces profils favorisant la retenue du renflement radial du téton par chaque patte.

Dans tous les cas, la longueur du téton peut être inférieure ou au plus égale à l'épaisseur que présente la deuxième pièce, au moins autour de la liaison, l'encombrement de cette liaison suivant la direction axiale étant ainsi nulle ou négligeable.

Dans le cas préféré où la première pièce est également réalisée dans un matériau autoportant, le téton peut venir de matière avec cette première pièce, indépendamment de l'élasticité intrinsèque du matériau dans lequel est réalisée cette première pièce, pourvu que ce matériau réponde aux exigences de résistance à l'arrachement imposées par l'usage auquel est destiné ce téton.

Le téton n'a pas non plus besoin d'être constitué d'un seul bloc et peut notamment être formé de deux parties séparées l'une de l'autre par une fente s'étendant suivant la direction axiale.

De préférence, les moyens de retenue comprennent au moins deux pattes élastiquement flexibles entourant au moins partiellement le logement.

En particulier, ces moyens de retenue peuvent comprendre deux pattes élastiquement flexibles disposées tête-bêche autour du logement et formant pince.

En pratique, l'une au moins des première et deuxième pièces peut avantageusement être réalisée par moulage d'un polymère ou d'un mélange de polymères.

L'assemblage mécanique de l'invention est notamment applicable, bien que de façon non limitative, à la fixation éventuellement réversible l'un sur l'autre d'au moins deux éléments d'un appareillage électrique du type de ceux qui comprennent une plaque, une sous-plaque, et / ou un support.

D'autres caractéristiques et avantages de l'invention ressortiront clairement de la description qui en est faite ci-après, à titre indicatif et nullement limitatif, en référence aux dessins annexés, dans lesquels :

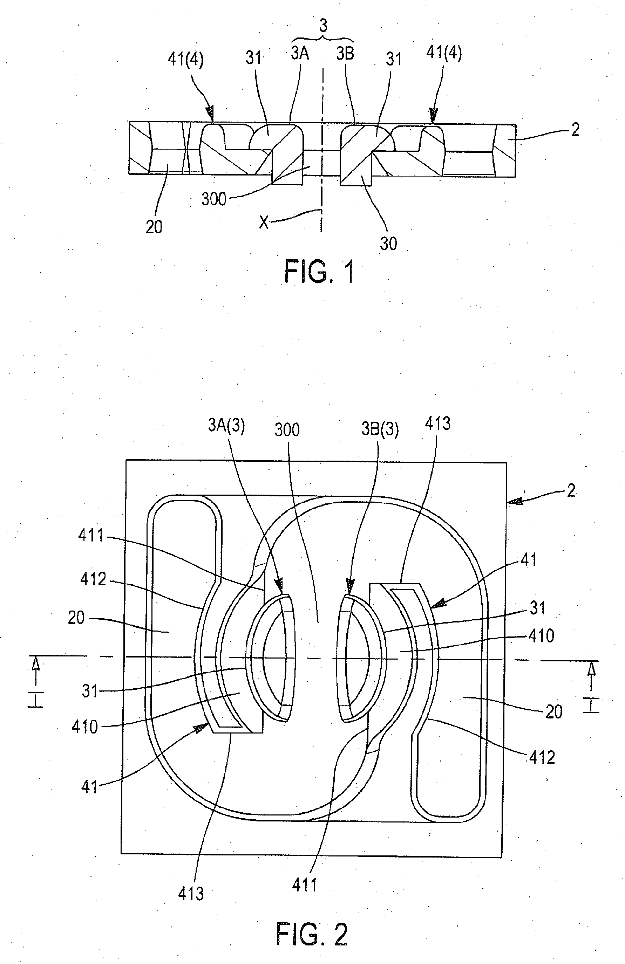

- la figure 1 est une vue en coupe axiale d'un assemblage conforme à l'invention, cette vue étant essentiellement limitée à la liaison de cet assemblage, et cet assemblage étant observé suivant l'incidence définie par les flèches I-I de la figure 2;
- la figure 2 est une vue de dessus de l'assemblage illustré à la figure 1;

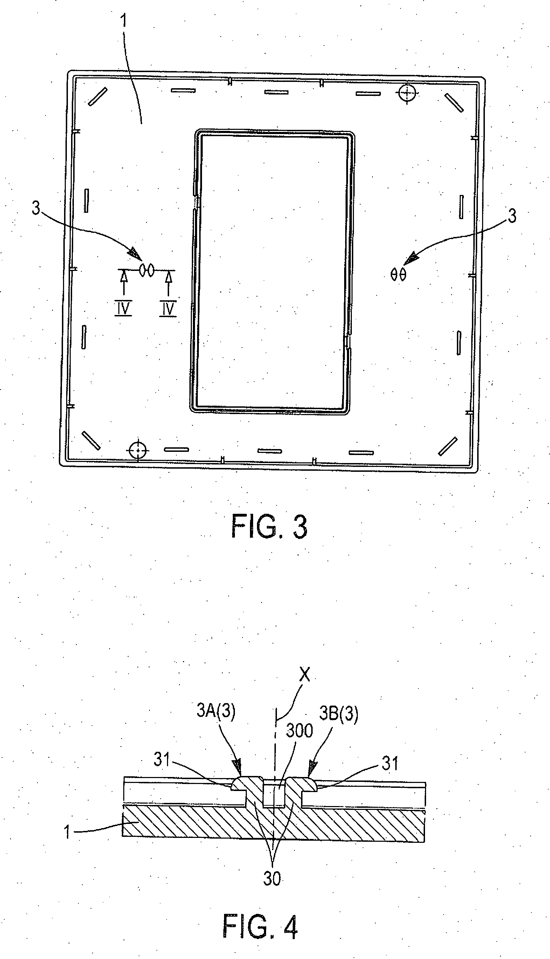

- la figure 3 est une vue en élévation d'une première pièce utilisable dans un assemblage conforme à l'invention, cette première pièce étant en l'occurrence constituée, à titre d'exemple, par une plaque d'un appareillage électrique;
- la figure 4 est une vue en coupe axiale à échelle agrandie du téton visible à la figure 3, ce téton étant observé suivant l'incidence définie par les flèches IV-IV de cette figure 3;
- la figure 5 est une vue en élévation d'une deuxième pièce utilisable dans un assemblage conforme à l'invention, cette deuxième pièce étant en l'occurrence constituée, à titre d'exemple, par une sous-plaque d'un appareillage électrique;
- la figure 6 est une vue en coupe axiale à échelle agrandie des moyens de retenue visibles à la figure 5, ces moyens étant observés suivant l'incidence définie par les flèches VI-VI de cette figure 5;
- la figure 7 est une vue en élévation d'un assemblage conforme à l'invention, cet assemblage comprenant la plaque visible à la figure 3 et la sous-plaque visible à la figure 5;
- la figure 8 est une vue en coupe axiale à échelle agrandie de la liaison visible à la figure 7, cette liaison étant observée suivant l'incidence définie par les flèches VIII-VIII de cette figure 7;
- la figure 9 est une vue en perspective de la deuxième pièce et des moyens de retenue visibles aux figures 5 et 6;
- la figure 10 est une vue en perspective de l'assemblage et de la liaison visibles aux figures 7 et 8; et

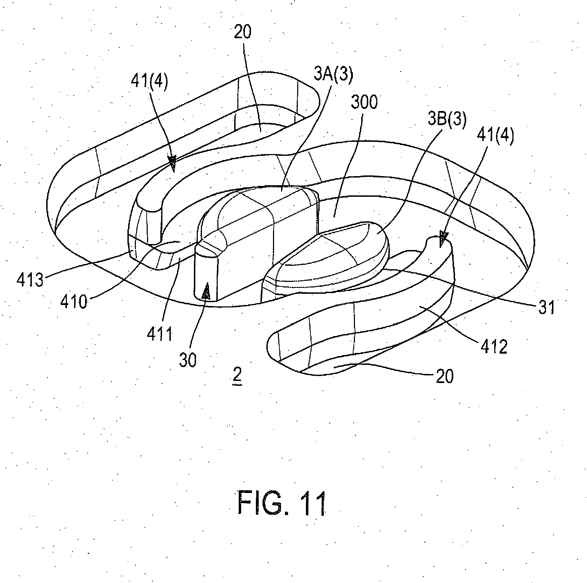

- la figure 11 est une vue à échelle agrandie d'un détail de la figure 10.

Les principaux éléments illustrés sur ces figures et invoqués dans la présente description sont repérés par des références entre parenthèses ou non, les références entre parenthèses étant affectées aux ensembles auxquels appartiennent les éléments repérés par des références sans parenthèses.

Comme annoncé précédemment, l'invention concerne un assemblage mécanique éventuellement réversible comprenant une première pièce 1, une deuxième pièce 2, et une liaison à bouton-pression comprenant elle-même un téton 3 et des moyens de retenue 4.

Le téton 3 est lié à la pièce 1 et présente, dans le sens de sa longueur, un fût 30 qui fait saillie de cette pièce 1, qui s'étend suivant une direction axiale X, et qui se termine par un renflement radial 31.

Les moyens de retenue 4 sont liés à l'autre pièce 2 et comprennent un logement 40 et un ou plusieurs verrous élastiques 41.

Le logement 40 est dimensionné pour recevoir le téton 3, y compris avec son renflement radial 31, lorsque ce téton est introduit dans ce logement 40 suivant la direction axiale X pour assembler les pièces 1 et 2 l'une avec l'autre.

Par ailleurs, chaque verrou élastique 41 est disposé dans le logement 40., est mobile transversalement à la direction axiale X, et est rappelé élastiquement vers une position de repos dans laquelle ce verrou élastique 41 laisse dans le logement 40 un passage plus étroit que l'encombrement du renflement radial 31.

Grâce à cet agencement, connu en lui-même, chaque verrou élastique 41 est déplacé de sa position de repos au passage du renflement radial 31 du téton 3, puis, ayant repris sa position de repos après le passage du renflement radial 31, maintient ce renflement radial en place dans le fond du logement.

Selon l'invention, la deuxième pièce 2 est réalisée dans un matériau autoportant élastiquement flexible et s'étend en épaisseur suivant la direction axiale X dans laquelle les pièces 1 et 2 sont rapprochées l'une de l'autre pour réaliser leur assemblage.

Dans un mode de réalisation avantageux de l'invention, la pièce 2 est par exemple réalisée par moulage d'un polymère ou d'un mélange de polymères, notamment de polymères thermoplastiques tels que le polycarbonate par exemple.

Le logement 40 est directement formé par un.perçage de cette pièce 2 suivant son épaisseur et chaque verrou élastique 41 est essentiellement formé par une patte 41 élastiquement flexible formée dans l'épaisseur de cette même pièce 2.

Par ailleurs, chaque patte 41 est délimitée en périphérie du logement 40 par un bord 411 correspondant, et présente une liberté de débattement radial d'amplitude non nulle. ,

Par exemple, la pièce 2 présente, pour chaque patte 41, une lumière de dégagement radial correspondante 20, cette lumière 20 étant pratiquée dans l'épaisseur de la pièce 2.

Chaque patte 41, qui présente ainsi un bord 412 qui la délimite de la lumière 20 correspondante, s'étend entre ses bords 411 et 412, et se termine de préférence par une extrémité libre 413.

En pratique, il est avantageux de prévoir que les moyens de retenue 4 comprennent plusieurs pattes 41 élastiquement flexibles disposées de manière à entourer au moins partiellement le logement 40.

Dans le mode de réalisation préféré qui est illustré aux figures, ces moyens de retenue 4 comprennent deux pattes 41 élastiquement flexibles qui sont disposées tête-bêche autour du logement 40 et qui coopèrent à la manière des mors d'une pince.

Comme le comprendra l'homme du métier, le dimensionnement des pattes 41 pourra avantageusement être déterminé ou optimisé, en fonction notamment de la nature du matériau constituant la pièce 2, soit par essai et erreur, soit avec l'aide de l'un quelconque des nombreux logiciels commercialement disponibles de résistance des matériaux, qui permettent de simuler le comportement d'une pièce mécanique en flexion et / ou sous contrainte.

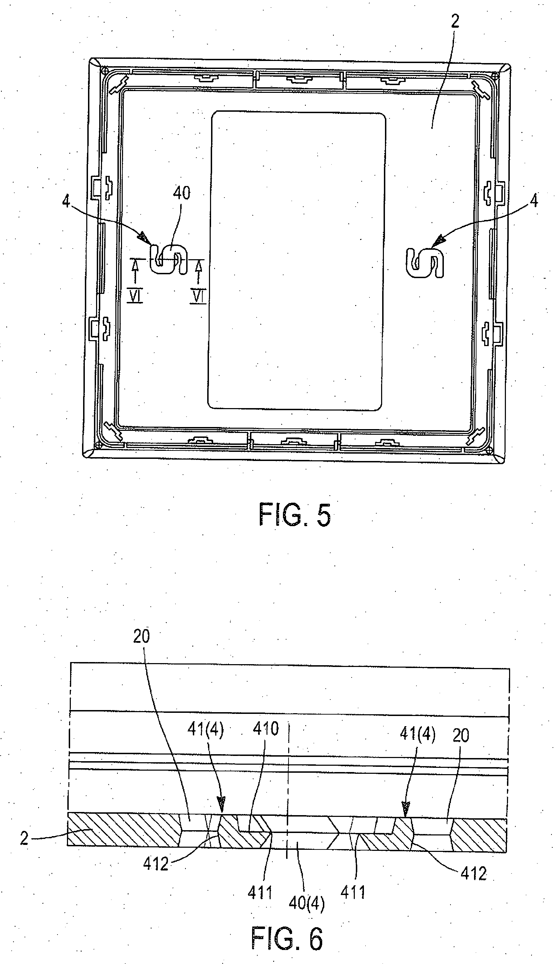

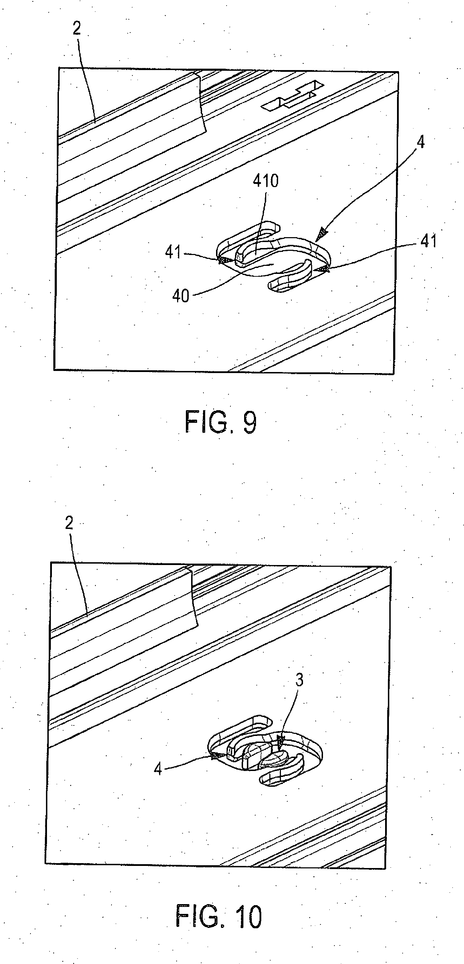

Comme le montrent notamment les figures 6 et 9, le bord 411 de chaque patte 41 présente de préférence un lamage 410, la présence d'un tel lamage permettant de réduire encore l'encombrement de la liaison dans la direction axiale X.

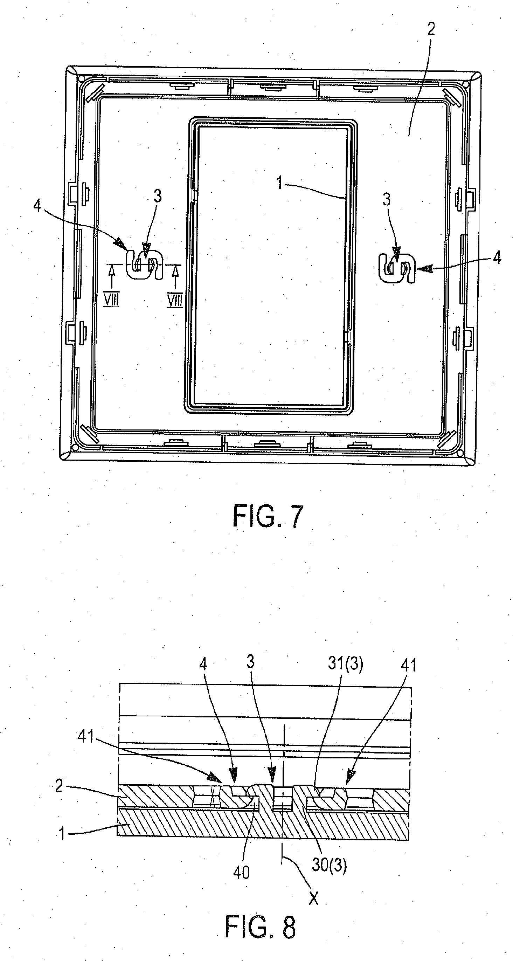

Dans ce cas, le téton 3 d'une part et ce lamage 410 d'autre part présentant, dans un plan passant par la direction axiale X et par exemple constitué par le plan de la figure 8, des profils respectifs au moins partiellement complémentaires pour coopérer mutuellement l'un avec l'autre.

Ces profils comportent par exemple des surfaces externes obliques par rapport à la direction axiale X pour faciliter l'insertion du téton 3 dans le logement 40, et des surfaces internes perpendiculaires à la direction axiale X pour favoriser la retenue du renflement 31 par chaque patte 41.

L'un des intérêts de l'invention réside dans le fait qu'elle permet d'assembler deux pièces rigides au moyen notamment d'un téton 3 sans requérir de ce téton qu'il présente une quelconque élasticité.

Dès lors, comme le montrent les figures, il suffit de donner à ce téton 3 une longueur au plus égale à l'épaisseur que présente la pièce 2, au moins autour de la liaison constituée par ce téton 3 et par les moyens de retenue 4, pour que cette liaison soit intégralement logée dans l'épaisseur de la pièce 2.

Dans le cas, qui correspond au champ d'application privilégié de l'invention, où la pièce 1 est réalisée dans un matériau autoportant, le téton 3 peut venir de matière avec la première pièce 1.

Par exemple, la pièce 1 peut elle aussi être réalisée par moulage d'un polymère ou d'un mélange de polymères, notamment de polymères thermoplastiques, et par exemple en polycarbonate.

Par ailleurs, le téton 3 n'est pas astreint à être monobloc mais peut au contraire, par exemple, être formé de deux parties telles que 3A et 3B, séparées l'une de l'autre par une fente 300 s'étendant suivant la direction axiale X.

Une telle fente 300 présente au moins l'intérêt d'éviter l'apparition de retassures qui risqueraient autrement de se produire dans le cas où la pièce 1 et le téton 3 sont réalisés d'un seul bloc par moulage, et qui risqueraient d'être jugées inesthétiques dans le cas où elles seraient offertes à la vue.

Bien qu'elle ait.été illustrée dans son application à la fixation éventuellement réversible de la plaque et de la sous-plaque d'un appareillage électrique comprenant éventuellement aussi un support lié à la sous-plaque, l'invention présente un champ d'application très vaste.

En particulier, l'invention peut être utilisée chaque fois que deux pièces moulées, notamment en matière plastique, doivent être assemblées l'une à l'autre, comme c'est par exemple couramment le cas des accessoires dans le domaine de la construction automobile, ou des accessoires décoratifs dans les domaines de la mode ou de l'habitat, ou dans tout autre domaine pour obtenir un habillage décoratif ou personnalisable.

## Revendications

1. Assemblage mécanique éventuellement réversible, comprenant une première pièce (1), une deuxième pièce (2), et une liaison (3, 4) à bouton-pression, la liaison (3, 4) comprenant un téton (3) lié à la première pièce (1) et des moyens de retenue (4) liés à la deuxième pièce (2), le téton (3) présentant, dans le sens de sa longueur, un fût (30) faisant saillie de la première pièce (1), s'étendant suivant une direction axiale (X), et se terminant par un renflement radial (31), et les moyens de retenue (4) comprenant un logement (40) dimensionné pour recevoir le téton (3) qui y est sélectivement introduit suivant la direction axiale (X) et au moins un verrou élastique (41), disposé dans le logement (40), mobile transversalement à la direction axiale (X), et rappelé élastiquement vers une position de repos dans laquelle ce verrou élastique (41) laisse dans le logement un passage plus étroit que l'encombrement du renflement radial (31), la deuxième pièce (2) s'étendant en épaisseur suivant la direction axiale (X), cette deuxième pièce (2) étant réalisée dans un matériau autoportant élastiquement flexible, le logement (400) étant formé par un perçage de la deuxième pièce (2) suivant son épaisseur, et chaque verrou élastique (41) étant essentiellement formé par une patte (41) élastiquement flexible formée dans l'épaisseur de la deuxième pièce (2), délimitée en périphérie du logement (40) par un premier bord (411), et présentant une liberté de débattement radial d'amplitude non nulle **caractérisé en ce que** le premier bord (411) de chaque patte (41) présente un lamage (410).

2. Assemblage mécanique suivant la revendication 1, **caractérisé en ce que** la deuxième pièce (2) présente, pour chaque patte (41), une lumière correspondante (20) de dégagement radial pratiquée dans l'épaisseur de cette deuxième pièce (2), chaque patte (41) présentant un deuxième bord (412) qui la délimite de la lumière correspondante (20), et s'étendant entre ses premier et deuxième bords (411, 412).

3. Assemblage mécanique suivant l'une quelconque des revendications précédentes, **caractérisé en ce que** chaque patte (41) présente une extrémité libre (413).

4. Assemblage mécanique suivant l'une quelconque des revendications précédentes, **caractérisé en ce que** le téton (3) d'une part et le lamage (410) du premier bord (411) de chaque patte (41) d'autre part présentent, dans un plan passant par la direction axiale (X), des profils respectifs au moins partiellement complémentaires.

5. Assemblage mécanique suivant l'une quelconque des revendications précédentes, **caractérisé en ce que** l'épaisseur de la deuxième pièce (2), au moins autour de la liaison (3, 4), est au moins égale à la longueur du téton (3).

6. Assemblage mécanique suivant l'une quelconque des revendications précédentes, **caractérisé en ce que** la première pièce (1) est réalisée dans un matériau autoportant, et **en ce que** le téton (3) vient de matière avec la première pièce (1).

7. Assemblage mécanique suivant la revendication 6, **caractérisé en ce que** le téton (3) est formé de deux parties (3A, 3B) séparées l'une de l'autre par une fente (300) s'étendant suivant la direction axiale (X).

8. Assemblage mécanique suivant l'une quelconque des revendications précédentes, **caractérisé en ce que** les moyens de retenue (4) comprennent au moins deux pattes (41) élastiquement flexibles entourant au moins partiellement le logement (40).

9. Assemblage mécanique suivant la revendication 8, **caractérisé en ce que** les moyens de retenue (4) comprennent deux pattes (41) élastiquement flexibles disposées tête-bêche autour du logement (40) et formant pince.

10. Assemblage mécanique suivant l'une quelconque des revendications précédentes, **caractérisé en ce que** l'une au moins des première et deuxième pièces (1, 2) est réalisée par moulage d'un polymère ou d'un mélange de polymères.

11. Application d'un assemblage mécanique suivant l'une quelconque des revendications précédentes à la fixation éventuellement réversible l'un sur l'autre d'au moins deux éléments d'un appareillage électrique comprenant une plaque, une sous-plaque, et / ou un support.

## Patentansprüche

1. Mechanische, eventuell umkehrbare, Anordnung, umfassend einen ersten Teil (1), einen zweiten Teil (2) und eine Druckknopfverbindung (3, 4), wobei die Verbindung (3, 4) einen Zapfen (3) umfasst, der mit dem ersten Teil (1) verbunden ist, und Rückhaltemittel (4), die mit dem zweiten Teil (2) verbunden sind, wobei der Zapfen (3) in seiner Längsrichtung einen Schaft (30) aufweist, der aus dem ersten Teil (1) vorsteht, der sich in einer axialen Richtung (X) erstreckt und in einer radialen Ausbuchtung (31) endet, und wobei die Rückhaltemittel (4) eine Aufnahme (40) umfassen, die abgemessen ist, um den Zapfen (3) aufzunehmen, der selektiv gemäß der axialen Richtung (X) eingeführt ist, und mindestens eine elastische Verriegelung (41), die in der Aufnahme (40) angeordnet ist, beweglich quer zu axialen Richtung (X) und elastisch in eine Ruheposition zurückgestellt, in der diese elastische Verriegelung (41) in der Aufnahme einen Durchgang lässt, der enger als die Abmessung der radialen Ausbuchtung(31) ist, wobei sich der zweite Teil (2) in der Dicke gemäß der axialen Richtung (X) erstreckt, wobei dieser zweite Teil (2) aus einem flexiblen elastischen selbsttragenden Material hergestellt ist, wobei die Aufnahme (40) durch eine Bohrung des zweiten Teils (2) gemäß ihrer Dicke gebildet ist, und wobei jede elastische Verriegelung (41) im Wesentlichen durch eine flexible elastische Lasche (41) gebildet ist, die in der Dicke des zweiten Teils (2) gebildet ist, im Umfang der Aufnahme (40) durch einen ersten Rand (411) begrenzt, und aufweisend eine Freiheit der radialen Bewegung mit einer Amplitude, die nicht null ist, **dadurch gekennzeichnet, dass** der erste Rand (411) jeder Lasche (41) eine Senkung (410) aufweist.

2. Mechanische Anordnung nach Anspruch 1, **dadurch gekennzeichnet, dass** der zweite Teil (2) für jede Lasche (41) eine entsprechende Öffnung (20) zur radialen Freisetzung aufweist, die in der Dicke dieses zweiten Teils (2) angebracht ist, wobei jede Lasche (41) einen zweiten Rand (412) aufweist, der die entsprechende Öffnung (20) begrenzt und sich zwischen ihrem ersten und zweiten Rand (411, 412) erstreckt.

3. Mechanische Anordnung nach einem der vorhergehenden Ansprüche, **dadurch gekennzeichnet, dass** jede Lasche (41) ein freies Ende (413) aufweist.

4. Mechanische Anordnung nach einem der vorhergehenden Ansprüche, **dadurch gekennzeichnet, dass** der Zapfen einerseits und die Senkung (410) des ersten Rands (411) jeder Lasche (41) andererseits in einer Ebene, die durch die axiale Richtung (X) verläuft, mindestens teilweise komplementäre entsprechende Profile aufweist.

5. Mechanische Anordnung nach einem der vorhergehenden Ansprüche, **dadurch gekennzeichnet, dass** die Dicke des zweiten Teils (2), mindestens um die Verbindung (3, 4), mindestens gleich der Länge des Zapfens (3) ist.

6. Mechanische Anordnung nach einem der vorhergehenden Ansprüche, **dadurch gekennzeichnet, dass** der erste Teil (1) aus einem selbsttragenden Material hergestellt ist, und dadurch, dass der Zapfen (3) aus dem gleichen Material wie der erste Teil (1) gebildet ist.

7. Mechanische Anordnung nach Anspruch 6, **dadurch gekennzeichnet, dass** der Zapfen (3) aus zwei Teilen (3A, 3B) gebildet ist, die voneinander durch einen Spalt (300) getrennt sind, der sich entlang der axialen Richtung (X) erstreckt.

8. Mechanische Anordnung nach einem der vorhergehenden Ansprüche, **dadurch gekennzeichnet, dass** die Rückhaltemittel (4) mindestens zwei elastisch flexible Laschen (41) umfassen, die mindestens teilweise die Aufnahme (40) umgeben.

9. Mechanische Anordnung nach Anspruch 8, **dadurch gekennzeichnet, dass** die Rückhaltemittel (4) zwei elastisch flexible Laschen (41) umfassen, die entgegengesetzt um die Aufnahme (40) angeordnet sind und eine Zange bilden.

10. Mechanische Anordnung nach einem der vorhergehenden Ansprüche, **dadurch gekennzeichnet, dass** mindestens einer des ersten und des zweiten Teiles (1, 2) durch Formen eines Polymers oder einer Mischung aus Polymeren durchgeführt ist.

11. Anwendung einer mechanischen Anordnung nach einem der vorhergehenden Ansprüche auf die eventuell umkehrbare Fixierung aufeinander von mindestens zwei Elementen eines elektrischen Geräts, umfassend eine Platte, eine Unterplatte und/oder eine Stütze.

## Claims

1. Possibly reversible mechanical assembly, comprising a first component (1), a second component (2) and a press-button link (3, 4), the link (3, 4) itself comprising a stud (3) linked to the first component (1) and holding means (4) linked to the second component (2), the stud (3) exhibiting, lengthwise, a core (30) protruding from the first component (1), extending along an axial direction (X), and terminated by a radial bulge (31), and the holding means (4) comprising a housing (40) dimensioned to receive the stud (3) which is selectively inserted according to the axial direction (X) and at least one elastic lock (41), positioned in the housing (40), capable of moving transversally to the axial direction (X), and elastically brought back to a resting position wherein this elastic lock (41) allows for a passage in the housing that is narrower than the size of the radial bulge (31), the second component (2) extending in thickness along the axial direction (X), this second component (2) being made from elastically flexible self-supporting material, the housing (40) being formed by drilling of the second component (2) along its thickness, and each elastic lock (41) being essentially formed by an elastically flexible lug (41) formed in the thickness of the second component (2), delimited at the periphery of the housing (40) by a first edge (411), and exhibiting a degree of radial play of non-zero amplitude, **characterised in that** the first edge (411) of each lug (41) has a counterbore (410).

2. Mechanical assembly according to claim 1, **characterised in that** the second component (2) has, for each lug (41), a corresponding radial clearance opening (20) made in the thickness of this second component (2), each lug (41) exhibiting a second edge (412) which delimits it from the corresponding opening (20), and extending between its first and second edges (411, 412).

3. Mechanical assembly according to any one of the previous claims, **characterised in that** each lug (41) has a free end (413).

4. Mechanical assembly according to any one of the previous claims, **characterised in that** the stud (3) on the one hand and the counterbore (410) of the first edge (411) of each lug (41) on the other hand have, in a plane passing through the axial direction (X), respective profiles that are at least partially complementary.

5. Mechanical assembly according to any one of the previous claims, **characterised in that** the thickness of the second component (2), at least around the link (3, 4), is at least equal to the length of the stud (3).

6. Mechanical assembly according to any one of the previous claims, **characterised in that** the first component (1) is made from self-supporting material, and **in that** the stud (3) is integral with the first component (1).

7. Mechanical assembly according to claim 6, **characterised in that** the stud (3) is formed from two parts (3A, 3B) separated from each other by a slot (300) extending along the axial direction (X).

8. Mechanical assembly according to any one of the previous claims, **characterised in that** the holding means (4) comprise at least two elastically flexible lugs (41) surrounding at least partially the housing (40).

9. Mechanical assembly according to claim 8, **characterised in that** the holding means (4) comprise two elastically flexible lugs (41) positioned head to foot around the housing (40) and forming a clamp.

10. Mechanical assembly according to any one of the previous claims, **characterised in that** at least one of the first and second components (1, 2) is produced by the casting of a polymer or a mixture of polymers.

11. Application of a mechanical assembly according to any one of the previous claims to the possibility reversible fixing one over the other of elements, of an electrical appliance comprising a plate, a sub-plate and/or a support.
